# EUROPÄISCHE PATENTSCHRIFT

(11) **EP 0 584 322 B1**
(45) Veröffentlichungstag und Bekanntmachung des Hinweises auf die Patenterteilung: **14.08.1996**
(21) Anmeldenummer: 93905177.7
(22) Anmeldetag: 10.03.1993
(51) Int. Cl.: F15B 15/28, F16B 2/06

(54) **STEUERZYLINDER FÜR PNEUMATISCHE STEUERGERÄTE MIT SIGNALKONTAKTEN**
CONTROL CYLINDER FOR PNEUMATIC CONTROL DEVICES WITH SIGNAL CONTACTS
VERIN POUR DES APPAREILS DE COMMANDE PNEUMATIQUES MUNIS DE CONTACTS DE SIGNALISATION

(30) Priorität: 13.03.1992 DE 4207971
(43) Veröffentlichungstag der Anmeldung: 02.03.1994
(73) Patentinhaber: NUMATICS GmbH, D-53757 Sankt Augustin (DE); PWB AG PRAEZISIONS-WERKZEUG-BAU, CH-9450 Altstätten (CH)
(72) Erfinder: FIEDLER, Reiner, D-5205 Sankt Augustin 3 (DE); SUPANZ, Johann, CH-9450 Altstätten (CH)
(74) Vertreter: Vierkötter, Hans-Ulrich
(86) Internationale Anmeldenummer: DE9300221
(87) Internationale Veröffentlichungsnummer: WO9318310

(56) Entgegenhaltungen:
- EP-A- 0 484 685
- WO-A-91/07252
- WO-A-91/10070
- DE-A- 2 319 676
- GB-A- 1 448 916

## Beschreibung

### Technisches Gebiet

Die Erfindung betrifft pneumatische Steuergeräte mit einem Steuerzylinder, der mit Signal- bzw. Steuerkontakten zur berührungslosen Abfrage der Stellung des Steuerkolbens ausgerüstet ist. Die Erfindung betrifft vor allem die Steuergeräte der besagten Art, die mit einem Steuerzylinder ausgerüstet sind, auf dessen Außenseite durch den Kolben des Steuerzylinders bzw. mit diesem verbundener Teile auf magnetischem oder elektronischem Wege steuerbare Kontakte, insbesondere sogenannte Reed-Kontakte oder dergleichen, angeordnet sind, die, sobald der Kolben eine vorgegebene Stellung erreicht, elektrische Stromkreise öffnen bzv. schließen.

### Stand der Technik

Derartige Reed-Kontakte sind üblicherweise in einem Gehäuse untergebracht, welches Führungselemente besitzt, mit Hilfe derer es in einer Führung auf der Außenseite des Zylinders verschiebbar ist, um seine Stellung gegenüber dem Zylinder und damit dem beweglichen Steuerkolben einstellen und justieren zu können. Es hat sich bewährt, derartige Führungen und Führungselemente als sogenannte Schwalbenschwanzführungen auszubilden, bei denen die schwalbenschwanzförmigen Führungselemente des Reed-Kontaktgehäuses von einer der beiden Stirnseiten des Steuerzylinders her in angepaßte schwalbenschwanzförmige Führungsnuten einführbar sind. Solange die Steuerzylinder mit nur einem Kontakt ausgerüstet sind, ergeben sich bei einer solchen Ausbildungsart keine schwerwiegenden Mängel. Sind jedoch zwei oder mehr Signal- oder Abfragekontakte für die Stellung des Steuerkolbens erforderlich, deren Stellung auf dem Steuerzylinder genau justiert sein muß, und fällt einer dieser Kontakte aus und muß ersetzt werden, müssen zusammen mit diesem in der Regel auch andere Kontakte ausgebaut, wieder eingebaut und in ihrer Stellung neu justiert werden.

### Darstellung der Erfindung

Die Erfindung bezweckt die Schaffung eines Steuerzylinders für pneumatische Steuereinrichtungen, und zwar in erster Linie die Ausbildung der Einrichtungen für die Halterung und Führung des Gehäuses für einen Signal- bzw. Abfrage-Kontakt, also einer Ausführungsform, die eine solchen Mangel nicht aufweist und insbesondere ein Einsetzen oder Auswechseln des Gehäuses in eine schwalbenschwanzförmige Führungsnut des Steuerzylinders ermöglicht, ohne daß eine Änderung der Stellung anderer Steuer- oder Signalkontakte bzv. ihrer Gehäuse erforderlich wird.

Eine solche Aufgabe ist gemäß der Erfindung durch eine besondere Ausbildung der Führungselemente am Gehäuse des Reed-Kontaktes zu lösen, bei der die Querschnittsfläche der im wesentlichen trapezförmigen Führungsschiene des Kontakt-Gehäuses eine von der trapezförmigen Querschnittsfläche der zugehörigen Führungsnut des Steuerzylinders abweichende Form besitzt, bei der bei im wesentlichen gleicher Höhe bzw. Tiefe beider Elemente (Schiene bzw. Nut) die Breite der Führungsschiene an der dem Kontaktgehäuse benachbarten Seite geringer als die Spaltbreite der Führungsnut an deren offener Seite ist und bei der die Gesamtbreite der Führungsschiene einseitig auf ein Maß verkürzt ist, welches durch einen Kreis um die eine Kante an der Schmalseite der Führungsschiene mit einem Radius bestimmt wird, der im Maximum gleich der Spaltbreite der Führungsnut ist, wobei der Abstand der anderen Kante an der Schmalseite der Führungsschiene von der diametral gegenüberliegenden Außenkante der Führungsschiene die Breite der Führungsnut übersteigt.

Um das Einsetzen der Führungsschiene des Kontaktgehäuses in die Führungsnut des Steuerzylinders zu erleichtern, sollte die Höhe der Führungsschiene zu der unverkürzten Seite der Führungsschiene hin abnehmen. Außerdem kann die Neigung der Seitenflächen der Führungsschiene von der Neigung der angrenzenden Flächen der Führungsnut abweichen, insbesondere verringert sein. Im konkreten Fall kann beispielsweise bei einem Winkel zwischen Seitenfläche und der Bodenfläche der Führungsnut von etwa 60° der entsprechende Winkel der Führungsschiene etwa 45° betragen.

### Kurze Beschreibung der Zeichnungen

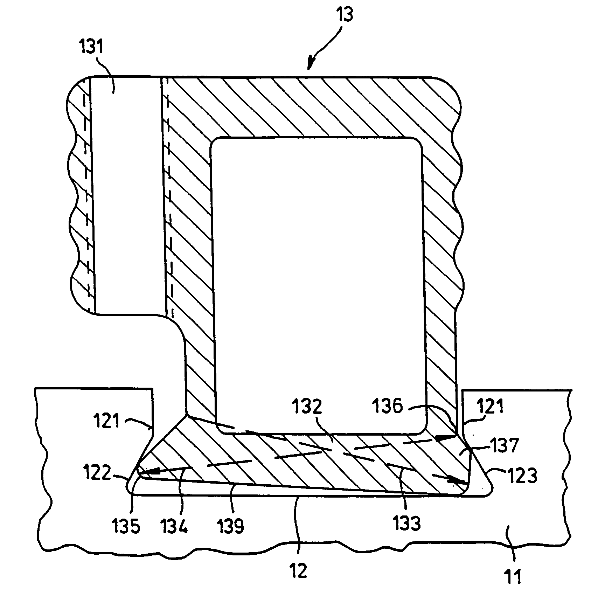

Die Erfindung soll an Hand eines Ausführungsbeispiels, das in der Zeichnung stark vergrößert mit den zum Verständnis wesentllichen Teilen dargestellt ist, erläutert werden, und zwar zeigt die Zeichnung den Gehäuserohling für den Kontakt mit den angrenzenden Teilen des ihn tragenden Steuerzylinders.

In der Zeichnung ist der Steuerzylinder mit 11 bezeichnet. Im Steuerzylinder ist eine im wesentlichen schwalbenschwanzförmige Nut 12 vorgesehen, die in ihren Abmessungen herkömmlichen Nuten für die Anbringung von Reed-Kontakt-Gehäusen entspricht. Das erfindungsgemäße Gehäuse ist in diese Nut einsetzbar, so daß ein Austausch herkömmlicher Gehäuse gegen die erfindungsgemäßen möglich ist und wahlweise beide Arten gleichzeitig verwendbar sind.

Das als Rohling im Schnitt dargestellte Kontaktgehäuse zur Aufnahme eines Reed-Kontaktes besteht aus einem Strangprofilabschnitt 13 mit im wesentlichen rechteckigem Querschnitt und einer Gevindebohrung 131 für die Aufnahme einer nicht dargestellten Stellschraube. Die in der Zeichnung untere Seite 132 des Gehäuses 13 ist als schwalbenschvanzförmige Führungsschiene mit im wesentlichen trapezförmigem Querschnitt ausgebildet. Form und Größe dieses Trapezes, die bei herkömmlichen Schwalbenschwanzführungen mit der Form und Größe der zugehörigen Querschnittsfläche der Führungsnut im wesentlichen übereinstimmen, weichen im vorliegenden Fall von der Form und Größe der Trapezfläche des Querschnitts der Nut 12 des Steuerzylinders 11 ab.

Die Abmessungen dieser Halte- und Führungsschiene 132 werden durch die Abmessungen der Führungsnut 12 am Zylinder 11 bestimmt. Um die der Erfindung zu Grunde liegende Aufgabe zu lösen, muß die Breite der Führungsschiene an der an das Gehäuse 13 angrenzenden Seite um einen gewissen Betrag geringer als die Breite des Spaltes 121 der Führungsnut 12 sein, um die Führungsschiene des Kontaktgehäuses innerhalb der Nut nach der Seite hin und her schieben zu können. Außerdem muß der im Prinzip trapezförmige Querschnitt auf einer Seite in dem durch den Radius 133 vorgegebenen Ausmaß gekürzt sein, wobei der Radius 133 im Maximum an die Breite des Spaltes 121 heranreichen darf. Ferner muß der Abstand 134, den die eine Außenkante 135 der Führungsschiene 132 von der diametral gegenüberliegenden inneren Kante 136 der Führungsschiene 132 besitzt, größer als die Breite des Spaltes 121 der Führungsnut 12 sein.

Wird bei solchen Abmessungen das Kontaktgehäuse 13 mit der Außenkante 135 der Führungsschiene voran in die Nut 12 eingesetzt, kann es mit dem verkürzten Teil 137 der Führungsschiene an der Außenkante 121 der Führungsnut 12 vorbei verschwenkt werden, bis sich die Führungsschiene 132 an den Boden der Führungsnut 12 anlegt. Wird dann die in der Bohrung 131 sitzende, nicht dargestellte Stellschraube angezogen, stützt sie sich auf der Oberseite bzv. Außenfläche des Steuerzylinders ab und zwingt die Außenkante 135 der Führungsschiene nach oben, wobei sie sich auf der Seitenwandung 122 der Nut aufwärts verschiebt und dadurch den verkürzten Teil 137 unter die Seitenwandung 123 der Nut 12 schiebt. Dadurch, daß die Außenfläche 139 als Unterseite der Führungsschiene zur Außenkante 135 hin ansteigend ausgebildet und damit die Höhe der Führungsschiene verringert ist, ergibt sich für das Einsetzen des Gehäuses 13 etwas mehr Spiel.

## Patentansprüche

1. Steuerzylinder (11) für pneumatische Steuervorrichtungen mit in Form einer Schvalbenschvanz-Führung mit Führungsschiene (132) und Führungsnut (12) ausgebildeten Einrichtungen für die Halterung und Führung eines Gehäuses (13) für einen Reed-Kontakt oder dergleichen, dadurch gekennzeichnet, daß die Querschnittsfläche der im wesentlichen trapezförmigen Führungsschiene (132) des Reed-Kontakt-Gehäuses eine von der trapezförmigen Querschnittsfläche der zugehörigen Führungsnut (12) des Steuerzylinders (11) abweichende Form besitzt, bei der bei im wesentlichen gleicher Höhe bzv. Tiefe beider Elemente (Schiene bzv. Nut) die Breite der Führungsschiene (132) an der dem Kontaktgehäuse benachbarten Seite geringer als die Spaltbreite (121) der Führungsnut (12) an deren offener Seite ist und bei der die Gesamtbreite der Führungsschiene (132) einseitig auf ein Maß verkürzt ist, welches durch einen Kreis um die eine Kante an der Schmalseite der Führungsschiene (132) mit einem Radius (133) bestimmt wird, der im Maximum gleich der Spaltbreite (121) der Führungsnut (12) ist, wobei der Abstand (134) der anderen Kante an der Schmalseite der Führungsschiene (132) von der diametral gegenüberliegenden Außenkante (135) der Führungsschiene (132) die Spaltbreite (121) der Führungsnut (12) übersteigt.

2. Steuerzylinder oder dergleichen nach Anspruch 1, dadurch gekennzeichnet, daß die Höhe der Führungsschiene (132) zu der unverkürzten Seite der Führungsschiene hin abnimmt.

3. Steuerzylinder oder dergleichen nach Anspruch 1 oder 2, dadurch gekennzeichnet, daß die Neigung der Seitenflächen der Führungsschiene (132) von der Neigung der angrenzenden Flächen (122; 123) der Führungsnut (12) abweicht.

4. Steuerzylinder oder dergleichen nach Anspruch 3, dadurch gekennzeichnet, daß die Neigung der Seitenflächen der Führungsschiene (132) im Vergleich zu der Neigung der Seitenflächen (122;123) der Führungsnut (12) bezogen auf deren Grundfläche verringert ist.

5. Steuerzylinder oder dergleichen nach Anspruch 4, dadurch gekennzeichnet, daß bei einer Neigung der Seitenfläche (122;123) der Nut (12) von etwa 60° zur Bodenfläche dieser Nut die Neigung der Seitenflächen der Führungsschiene (132) etwa 45° beträgt.

## Claims

1. Control cylinder (11) for pneumatic control devices with systems designed in the form of a dovetailed guide with guide rail (132) and guide groove (12) for the holding and guidance of housing (13) for a reed contact or the like, characterised in that the cross-sectional area of the substantially trapezoidal guide rail (132) of the reed contact housing has a form differing from the trapezoidal cross-sectional area of the associated guide groove (12) of the control cylinder (11) in which the width of the guide rail (132) is smaller on the side adjacent to the contact housing than the gap width (121) of the guide groove (12) on its open side with substantially identical height and depth of the two elements (rail and groove) and in which the overall width of the guide rail (132) is shortened on one side to a size determined by a circle round one edge on the narrow side of the guide rail (132) with a radius (133) which is at most equal to the gap width (121) of the guide groove (12), the spacing (134) between the other edge on the narrow side of the guide rail (132) and the diametrically opposed outer edge (135) of the guide rail (132) exceeding the gap width (121) of the guide groove (12).

2. Control cylinder or the like according to claim 1, characterised in that the height of the guide rail (132) decreases toward the unshortened side of the guide rail.

3. Control cylinder or the like according to claim 1 or 2, characterised in that the inclination of the lateral faces of the guide rail (132) differs from the inclination of the adjoining faces (122;123) of the guide groove (12).

4. Control cylinder or the like according to claim 3, characterised in that the inclination of the lateral faces of the guide rail (132) is reduced in comparison with the inclination of the lateral faces (122;123) of the guide groove (12) with respect to its base area.

5. Control cylinder or the like according to claim 4, characterised in that, with an inclination of the lateral face (122;123) of the groove (12) of about 60° to the base of this groove, the inclination of the lateral faces of the guide rail (132) is about 45°.

## Revendications

1. Cylindre de commande destiné à des systèmes de commande pneumatique et équipé de dispositifs ayant la forme d'un guidage à queue d'aronde comportant un rail de guidage (132) et une rainure de guidage (12), ces dispositifs servant à maintenir et à guider un boîtier (13) équipé d'un contact Reed ou organe analogue,
caractérisé en ce que :
- la section transversale du rail de guidage (132) du boîtier du contact Reed, essentiellement trapézoïdale, est pourvue d'une section transversale également trapézoidale de la rainure de guidage correspondante (12) du cylindre de commande (11) à savoir que ces deux éléments (rail et rainure) ont sensiblement la même hauteur et profondeur, mais que la largeur du rail (132) sur son côté proche du boîtier de contact est inférieure à la largeur (121) de la rainure de guidage (12) au niveau de son ouverture,
- la largeur totale du rail de guidage (132) est, d'un côté, d'une cote raccourcie qui est déterminée par un cercle sur un des bords du côté étroit du rail (132) et par un rayon (133) qui est égal au maximum à la largeur (121) de la rainure de guidage (12), tandis que la distance (134) de l'autre bord du côté étroit du rail de guidage (132) du bord externe (135) diamétralement opposé au rail de guidage (132) dépasse la largeur (121) de la rainure de guidage (12).

2. Cylindre de commande ou organe analogue selon la revendication 1,
caractérisé en ce que
la hauteur du rail de guidage (132) va décroissant en direction du côté non raccourci du rail de guidage.

3. Cylindre de commande ou organe analogue selon la revendication 1,
caractérisé en ce que
la pente des faces latérales du rail de guidage (132) est différente de celle des faces en regard (122; 123) de la rainure de guidage (12).

4. Cylindre de commande ou organe analogue selon la revendication 3,
caractérisé en ce que
la pente des faces latérales du rail de guidage (132) comparée à celle des faces (122; 123) de la rainure de guidage (12) est diminuée par rapport à sa base.

5. Cylindre de commande ou organe analogue selon la revendication 4,
caractérisé en ce que
pour une pente environ de 60° de la face latérale (122, 123) de la rainure (12) par rapport à la surface de base de celle-ci, la pente des faces latérales de la rainure de guidage (132) atteint environ 45°.
